# EUROPEAN PATENT SPECIFICATION

(11) **EP 1 099 263 B1**
(45) Date of publication and mention of the grant of the patent: **03.04.2002**
(21) Application number: 99929562.9
(22) Date of filing: 01.07.1999
(51) Int. Cl.: H01M 2/00

(54) **FUEL CELL STACK MADE OF TUBE CELLS, AND INTERNAL COOLING ARRANGEMENT THEREFOR**
BRENNSTOFFZELLENSTAPEL AUS ROHRZELLEN UND INNERE KÜHLANORDNUNG DAFÜR
BATTERIES DE PILES A COMBUSTIBLE COMPOSEES DE PILES TUBULAIRES, ET SYSTEME DE REFROIDISSEMENT INTERNE POUR CES DERNIERES

(30) Priority: 01.07.1998 GB 9814123
(43) Date of publication of application: 16.05.2001
(73) Proprietor: BALLARD POWER SYSTEMS INC., Burnaby, British Columbia V5J 5J9 (CA)
(72) Inventor: MCLEAN, Gerard, Francis, Victoria, British Columbia V8N 3Z2 (CA)
(74) Representative: Powell, Stephen David
(86) International application number: PCT/GB99/02131
(87) International publication number: WO 00/02274

(56) References cited:
- US-A- 3 607 425
- US-A- 4 175 165
- US-A- 5 252 410
- PATENT ABSTRACTS OF JAPAN vol. 008, no. 209 (E-268), 22 September 1984 (1984-09-22) -& JP 59 096669 A (KOGYO GIJUTSUIN;OTHERS: 0J), 4 June 1984 (1984-06-04)
- PATENT ABSTRACTS OF JAPAN vol. 1997, no. 10, 31 October 1997 (1997-10-31) -& JP 09 161812 A (KUWABARA AKIRA), 20 June 1997 (1997-06-20)
- PATENT ABSTRACTS OF JAPAN vol. 018, no. 332 (E-1567), 23 June 1994 (1994-06-23) -& JP 06 084532 A (SUMITOMO ELECTRIC IND LTD), 25 March 1994 (1994-03-25)
- PATENT ABSTRACTS OF JAPAN vol. 018, no. 658 (E-1643), 13 December 1994 (1994-12-13) -& JP 06 260190 A (MITSUBISHI HEAVY IND LTD), 16 September 1994 (1994-09-16)
- PATENT ABSTRACTS OF JAPAN vol. 016, no. 095 (E-1175), 9 March 1992 (1992-03-09) -& JP 03 274671 A (MITSUBISHI ELECTRIC CORP), 5 December 1991 (1991-12-05)

## Description

### FIELD OF THE INVENTION

The present invention relates to electrochemical cells and particularly to fuel cells incorporating a proton exchange membrane. More particularly, the present invention relates to a tubular structure of such fuel cell stacks and an internal cooling arrangement therefor.

### BACKGROUND

Electrochemical fuel cells convert fuel and oxidant to electricity and reaction product. In electrochemical fuel cells employing hydrogen as the fuel and oxygen as the oxidant, the reaction product is water. Conventional proton exchange membrane ("PEM") fuel cells generally employ a planar, layered structure known as a membrane electrode assembly ("MEA"), comprising a solid polymer electrolyte or ion exchange membrane, which is neither electrically conductive nor porous, disposed between an anode electrode layer and a cathode electrode layer. The electrode layers are typically comprised of porous, electrically conductive sheets. Electro-catalyst particles located at each membrane-electrode interface promote the desired electrochemical reaction.

In conventional fuel cells, the MEA is interposed between two rigid, planar, substantially fluid-impermeable, electrically conductive plates, commonly referred to as separator plates. The plate in contact with the anode electrode layer is referred to as the anode plate and the plate in contact with the cathode electrode layer is referred to as the cathode plate. The separator plates (1) serve as current collectors, (2) provide structural support for the MEA, and (3) typically provide reactant channels for directing the fuel and oxidant gases to the anode and cathode electrode layers, respectively, and for removing reaction products (normally water) formed during operation of the fuel cell. Fuel channels and oxidant channels are typically formed in the separator plates; the plates in this context are sometimes referred to as fluid flowfield plates. Herein, "fluid" includes both gases and liquids; although the reactants are typically gaseous, the reaction products may be liquids or liquid droplets as well as gases.

During operation of the fuel cell, hydrogen from a fuel gas stream moves from fuel channels through the porous anode electrode material and is oxidized at the anode electro-catalyst to yield electrons that are collected at the anode plate and hydrogen ions that migrate through the electrolyte membrane. At the same time, oxygen from an oxygen-containing gas stream moves from oxidant channels through the porous electrode material to combine with the hydrogen ions that have migrated through the electrolyte membrane and electrons from the cathode plate to form water. A useful current of electrons travels from the anode plate through an external circuit to the cathode plate to provide electrons for the reaction occurring at the cathode electro-catalyst. The external circuit normally includes the load driven by the fuel cell.

Multiple unitary fuel cells are conventionally stacked together to form a fuel cell stack to increase the overall power output. Stacking is typically accomplished by the use of electrically conductive bipolar separator plates. One side of the bipolar plate acts as an anode separator plate for one fuel cell, while the other side of the bipolar plate acts as a cathode separator plate for the next sequential fuel cell in the stack. The bipolar plates, in which the fuel channels and oxidant channels are formed, combine the functions of anode and cathode plates referred to above.

Fluid reactant streams are typically supplied to channels in the flow field plates via external inlet manifolds connected to the sides of the stack or by internal inlet manifolds that align openings formed in the bipolar plates and each MEA. Similarly, fluid stream exhaust manifolds may be either external or internal exhaust manifolds. Typically the stack also has coolant passageways extending through the bipolar plates and the MEAs for circulating a coolant fluid to special cooling plates that are interposed with other layers in the stack to absorb heat generated by the fuel cell reaction.

A typical conventional bipolar plate has a plurality of parallel open-faced oxidant channels on one side and a plurality of parallel open-faced fuel channels on the other side. The oxidant channels extend between an oxidant manifold inlet port and an oxidant manifold outlet port in the bipolar plate. The channels typically traverse the interior area of the associated plate surface in a plurality of passes, that is, in a serpentine manner, between the inlet manifold port and the outlet manifold port. Similarly, the fuel channels extend between a fuel manifold inlet port and a fuel manifold outlet port in the bipolar plate and traverse the interior area of the other plate surface in a similar plurality of passes (typically in a serpentine configuration) between the fuel inlet manifold opening and the fuel outlet manifold opening. Channel patterns other than serpentine may be used in conventional fuel cell plates, but serpentine channel patterns have generally been found to work the best.

Watkins, U.S. Patents Nos. 4,988,583 and 5,108,849, issued 29 January 1991 and 28 April 1992, respectively, describe fluid flowfield plates in which continuous open-faced fluid flow channels formed in the surface of the plate traverse the interior area of the plate surface in a serpentine manner between an inlet manifold port and an outlet manifold port formed in the plate. These patents describe typical prior component designs for fuel cells having conventional planar layers.

In conventional fuel cell designs, only a portion of the porous electrode structure is exposed directly to the flow of reactants in the flow channels. The remainder of the porous electrode structure is in contact with the material of the typically non-porous, but electrically conducting flowfield plates. In practice, conventional fuel cell design has involved a trade-off between (1) increasing the electrode area directly exposed to reactant flow, thus increasing the current and power that can be produced by a given area of electrode material; and (2) increasing the electrode area in contact with the flowfield plates, thus reducing the contact resistance between the electrode material and the conducting flow field plate material, and increasing physical support for the somewhat fragile MEA.

The MEA needs physical support in a conventional fuel cell stack as it is exposed to the compression forces needed to prevent fluid leaks between adjacent fluid flow channels in the fuel cell stack. In conventional fuel cells, such leakage is undesirable, particularly if the channels are serpentine, as some of the fluid may move directly from the inlet manifold opening across the channels to the outlet manifold opening without passing through the flowfield channels, failing to reach the MEA. To prevent such fluid movement, separator plates with precisely flat surfaces are required, necessitating either the grinding of the surfaces of the separator plates or precise dimensioning of the molds used to form the separator plates to meet exacting tolerances.

The compression needed to prevent leakage and to reduce contact resistance is conventionally obtained by clamping the fuel cell stack together. Clamping is undesirable, as fuel cell layers must be strong to resist crushing, and the clamping hardware is bulky and adds weight to the fuel cell stack. Significantly higher power density could be obtained if clamping forces could be reduced or eliminated.

Disclosed in the prior technical literature are a number of fuel cell structures having non-planar elements. For example, Dodge, U.S. Patent No. 5,509,942, issued 23 April 1996, and Dodge, U.S. Patent No. 5,458,989 issued 17 October 1995, describe tubular fuel cells, but do not suggest that the cells be contiguously oriented in a planar array forming a tier and do not suggest stacking such tubular arrays.

Sterzel, U.S. Patent No. 4,774,153, 27 September 1988, discloses a single tubular-configuration, and does not show the use of contiguous tubes in a stacked array.

Isenberg, U.S. Patent No. 4,728,584, issued 1 March 1988, provides an array of stacked tubes, each tube having annular inner and outer electrodes.

In general, prior fuel cell designs perpetuate the discrete-MEA-layer approach to design and fabrication of fuel cell stacks, resulting in more or less planar configurations that are manufactured as discrete components and then assembled, requiring large clamping forces and bulky clamping apparatus to hold the cell together in operation. As a result, prior designs tend to be inefficient in their utilization of stack volume, heavy due to the constraints imposed by a clamped together design, and expensive due to the need for a series of discrete manufacturing processes.

An optimal design for a fuel cell stack should have at least the following characteristics:
(1) The conductive path between the anode plate of each unitary cell and the cathode plate of the next unitary cell in sequence in the stack should have as low an electrical resistance as possible.
(2) The contact resistance between the anode and cathode plates and the MEA should be as low as possible without requiring large mechanical clamping forces.
(3) As much of the electro-catalyst as possible should be uniformly exposed to reactants.
(4) The flow of reactants should be appropriate to the capacity of the cell to utilize the reactants in the electrochemical reaction.
(5) There should be very little or no unwanted flow-channel cross-over or leak of fluid between adjacent fluid flow channels carrying the same reactant gas, and of course no cross-over or leak whatsoever between flow channels carrying different reactant gases.
(6) Power density should be maximized (*i*.*e*., volume and weight per unit of power generated should be minimized).
(7) Manufacturing methods should be simple and inexpensive. A ready means of continuous mass production of component elements should be available.

As discussed above, conventional PEM fuel cell designs are not optimal if compared to the foregoing objectives, in part because (1) significant portions of the electro-catalyst layer are not efficiently exposed to reactants; and (2) large clamping forces are required to reduce contact resistance, both of which factors decrease power density and tend to add to the expense of manufacture. Furthermore, the majority of existing fuel cell designs require the manufacture of discrete unit MEAs and complex flowfield separator plates, which must be manufactured by machining bulk materials.

### SUMMARY OF THE INVENTION

In the following description and in the claims:
(i) the "flow dimension" or "axial dimension" is parallel to the direction of flow of fluid through the flow channels illustrated; the flow dimension is perpendicular to the plane of each figure of the drawings;
(ii) the "stack dimension" is the dimension that measures the total combined thickness of fuel cells in the stack, and is perpendicular to the planes of the end plates of the stack (in a conventional stack, this dimension would be perpendicular to each of the planar component layers); and
(iii) the "transverse dimension" is perpendicular to both the flow and stack dimensions, and is the horizontal dimension in the figures of the drawings.

As discussed, PEM-type fuel cell stacks comprise a series of MEA and separator layers alternating with one another and stacked together in mechanical and electrical contact. The layers include conduits for flow of reactant gases from external sources to electrochemically active regions of the MEA layers and conduits for coolants. Each MEA layer includes an electrolytic membrane sandwiched between anode and cathode layers. According to the present invention, at least the boundary portions of each separator layer and of the MEA layers associated therewith are formed by a series of generally parallel tubular elements extending generally perpendicular to the stack dimension and closely packed beside one another, each said tubular element extending longitudinally in the flow dimension. The tubular elements may be hollow circular cylinders, although other suitable cross-sectional configurations may be used instead.

In circular cylindrical embodiments in which adjacent parallel arrays of tubes are offset from one another to improve compacting in the stack dimension, the membrane of each MEA layer may occupy most of the space between adjacent tubes; each electrode portion of the MEA layer may conveniently follow the semi-cylindrical profile of the semi-cylindrical MEA boundary, in which case the separator layer would be formed by the opposed semi-cylindrical portion of the tube. Alternatively, each array of parallel cylindrical tubes could be divided by a planar separator plate, in which case each of the semi-circular portions of a given complete circular cylinder would constitute the boundary of an MEA layer. Compact arrangement of parallel arrays of tubes can also be conveniently designed from hexagonal, trapezoidal, triangular and other suitable tubular cross-sections.

In one embodiment of the present invention, each fuel cell of a fuel cell stack is formed from two transversely arrayed layers of parallel circular cylindrical tubes of equal diameter, between which layers is a layer of membrane material. The tubes are formed from material that is initially reactant gas-permeable. The portions of the tubes that are not to be in electrochemical contact with the membrane are treated to render them reactant gas-impermeable, and the portions of the tubes that are to be in contact with the membrane are electro-catalyzed. Preferably, the layers of tubes are transversely offset from one other by half the diameter of a tube so as to minimize the thickness of the combined fuel cell in the stack dimension. The fuel cell stack is formed from a multiplicity of such fuel cells stacked in the stacking dimension. Adjacent sequential fuel cells in the stack are also preferably transversely offset from each other so as to minimize the total combined thickness of the fuel cells in the stack dimension. Cooling may be provided by conduits running between adjacent tubes in the flow dimension in otherwise unused spaces between the reactant gas-impermeable portions of the tubes of adjacent fuel cells. Humidification conduits may also be conveniently provided in similar unused spaces between the tubes, but the humidification conduits differ from the cooling conduits in being porous and may, in some embodiments of the invention, be located within the membrane material, thus achieving direct internal humidification of the fuel cell membrane.

Alternatively, the circular cylindrical tubes may be formed from two arrays of semicylinders, the semicylinders in each array arranged in side-by-side contact such that the points of contact between transversely successive semicylinders are at the ends of the arcs of the semicylindrical surfaces and lie in a plane perpendicular to the stack direction, and the concave surfaces of the semicylinders of each array all have the same orientation. Pairs of separator semicylinders alternate in the stack direction with pairs of electrode semicylinders, the electrolytic membrane layers each lying between successive electrode semicylinders in a pair. In fuel cell stacks in which the tubes are formed in the foregoing manner, additional cooling may be provided by the interposition, between sequential arrays of semicylinders in the stack, of a discrete fluid-impermeable planar separator plate lying perpendicular to the stack direction. Such separator plate viewed along the flow dimension appears to bisect a transverse array of circular cylinders, although that is not how the structure is formed. Selected ones of the semicylindrical tubes formed between the planar separator plate and the reactant gas-impermeable portion of the arcuate surfaces may be used as coolant conduits.

Topologically equivalent variations using tubes having a variety of cross-sectional shapes are useful. Tubes having triangular or trapezoidal cross-sections are particularly advantageous, as they offer compact stacking and ease of manufacture. The trapezoidal option affords the opportunity for convenient interposition of coolant and humidification conduits in the vicinity of the narrower of the two parallel sides of the trapezoid. Tubes of hexagonal and other suitable cross-sections will occur to those skilled in the technology as alternatives.

Fuel cell stacks incorporating the present invention provide improved power density due to the use of undulate electrolyte layers that follow the curvature of the arcuate surfaces of the tubes, and due to the integration of the cooling function (and, if desired, the humidification function) into otherwise poorly utilized space. In addition, fuel cells according to the present invention advantageously may be manufactured by forming endless tubular and other component layers, and then cutting the interim product to length for to width) to form fuel cell components of the desired dimensions. Thus the fuel cell stacks may be built up from discrete tubular elements and complementary membrane layers, thereby offering the low expense and simplicity of continuous manufacture of the tubes, and easy construction of an overall monolithic fuel cell structure, without the need for individual manufacture of discrete plates and frame structures that is required for conventional fuel cell designs.

It is also an aspect of the invention to use hydrogen in a fuel cell stack that is made up of fuel cell layers comprised of tubular elements as heretofore described and that is connectable via an anode terminal and a cathode terminal to an external load. Each fuel cell layer has an MEA layer and two associated reactant-gas impermeable composite separator layers. The MEA layer has a porous anode electrode, a porous cathode electrode, an electrolytic membrane layer disposed between the two electrodes, an anode electro-catalyst layer disposed between the electrolytic membrane layer and the anode electrode, and a cathode electro-catalyst layer disposed between the electrolytic membrane layer and the cathode electrode. One side of one separator layer in conjunction with the MEA layer provides at least one flowpath of a flow field for hydrogen and one side of the other separator layer in conjunction with the MEA layer provides at least one flowpath of a flow field for a selected oxidant. The flowpaths are constituted over their greater length by parallel transversely spaced and longitudinally extending flow channels interconnected in the vicinity of their ends to form the flowpaths. The MEA layer is installed in the stack between the associated separator layers so that the side of the separator layer that in conjunction with the MEA layer provides flow channels of a flow field for hydrogen faces and is in contact with the anode side of the MEA layer, whilst the side of the separator layer providing flow channels of a flow field for oxidant faces and is in contact with the cathode side of the MEA layer, so that the hydrogen flow channels are closed to form a conduit for supplying hydrogen to the MEA layer and the oxidant flow channels are closed to form a conduit for supplying oxidant to the MEA layer. The fuel cells are stacked in sequence, the anode electrode of the fuel cell at one extremity of the stack being electrically connected to the anode terminal, the cathode electrode of the fuel cell at the other extremity of the stack being electrically connected to the cathode terminal, and the anode electrode of each of the other fuel cells in the stack being electrically connected to the cathode electrode of the next adjacent fuel cell. When the anode terminal and cathode terminal are electrically connected through an external load and for each fuel cell hydrogen is supplied to the hydrogen conduit and oxygen is supplied to the oxidant conduit, then in each fuel cell hydrogen moves from the hydrogen flow field through the anode electrode and is ionized at the anode electro-catalyst layer to yield electrons and hydrogen ions, the hydrogen ions migrate through the electrolytic membrane layer to react with oxygen that has moved from the oxidant flow field through the cathode to the cathode electro-catalyst layer and with electrons that have moved from the anode electrode electrically connected to the cathode electrode, thereby to form water as a reaction product, and a useful current of electrons is thereby produced through the load.

### SUMMARY OF THE DRAWINGS

Figure 1 is a schematic cross-sectional view along the flow dimension of an element of a tubular fuel cell constructed according to one embodiment of the present invention.

Figure 2 is a schematic cross-sectional view along the flow dimension of a variant of the fuel cell element of Figure 1, also in accordance with an embodiment of the invention.

Figure 3 is a schematic cross-sectional view along the flow dimension of a stacking arrangement of two fuel cell elements of Figure 1 into a simple unitary fuel cell.

Figure 4 is a schematic cross-sectional view along the flow dimension of a stacking arrangement of an interconnected array of the unitary fuel cells of Figure 1 to form a composite fuel cell arrangement that can serve as a fuel cell layer in a stack, or as a portion of such layer.

Figure 5 is a schematic cross-sectional view along the flow dimension of a stacking arrangement of two fuel cell layers, each a variant of the fuel cell layers of Figure 4, into a simplified fuel cell stack arrangement. Cooling and humidification conduits are shown interposed between the fuel cell layers.

Figure 6 is a schematic cross-sectional view along the flow dimension of a stacking arrangement of two fuel cell layers, each a variant of the fuel cell layers of Figure 4, into a simplified fuel cell stack arrangement. Separator plates are shown interposed between sequential semicylindrical layers.

Figure 7 is a schematic cross-sectional view along the flow dimension of a stacking arrangement of two fuel cell layers, each formed of tubes of triangular cross-section and each the topological equivalent of the cell layer of Figure 4 (save that the tubular arrays of Figures 4 and 7 do not contain the same number of exemplary tubes) into an integrated fuel cell stack arrangement.

Figure 8 is a schematic cross-sectional view along the flow dimension of a stacking arrangement of two fuel cell layers, each formed of tubes of trapezoidal cross-section and each the topological equivalent of the cell layer of Figure 4 (save that the tubular arrays of Figures 4 and 8 do not contain the same number of exemplary tubes) into an integrated fuel cell stack arrangement. Coolant conduits are shown within the stack.

### DETAILED DESCRIPTION OF THE INVENTION

To provide a working fuel cell stack taking advantage of the increased power density capable of being provided by non-planar MEA strata rather than planar MEA strata, it is necessary to satisfy the following design criteria: (1) maintain the dimensional stability of the stack and particularly of the MEA strata within the stack; (2) separate oxidant on the cathode side of one MEA from fuel on the anode side of the next MEA in the stack; and (3) provide electrical connection between the cathode side of one MEA and the anode side of the next MEA in the stack. In general, the MEA structures discussed in detail below meet these three criteria. The fuel cell stack according to the invention comprises tubular structures that act as conduits for reactant fluids. The tubular structures are selected and combined or treated so that portions of each structure act as electrodes of MEA strata. A gel form of proton exchange membrane may advantageously be used. The electrochemical process employed is conventional; the MEA structural aspects of the present invention are directed to preferred configurations of the elements described, not to their specific material composition nor to their electrochemical activity.

Since the resulting fuel cell structure according to the invention may be conveniently built up from discrete tubular elements, the overall design is more conducive to manufacturing than existing fuel cell designs and it is anticipated that simpler and more efficient processes can be developed for production, especially in designs where the dimensions of the reactant flowpaths are small. First, the tubular structures and the MEA layers from which the fuel cell is composed can be manufactured in a continuous process and later cut to length for stack fabrication. Second, the stack may advantageously be manufactured simply by stacking the discrete tubular elements, interposing layers of membrane electrolyte material that functions also as a weak bonding agent to hold the stack together, and using simple cured resin bonds to seal the resulting fuel cell structure.

A further benefit of the invention is that since the membrane materials are in direct contact with the current collectors the cell does not rely on simple mechanical clamping force to reduce internal resistance to acceptable levels. As a result, it is anticipated that the overall fuel cell stack can be made lighter through the virtual elimination of externally applied clamping forces.

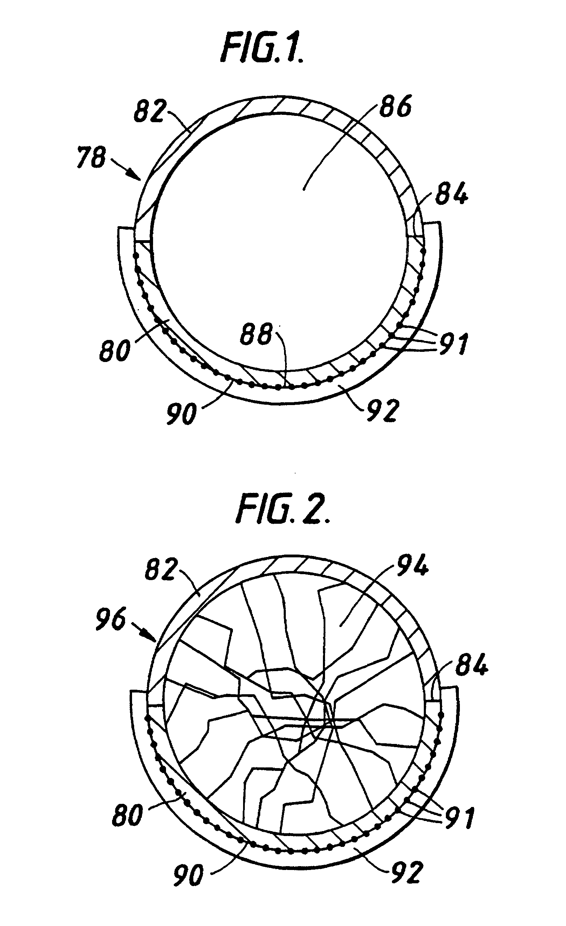

An embodiment of the tubular fuel cell stack structure of the present invention suitable for mass production is a multi-tubular structure that may be built-up out of elements of the form shown in Figure 1. A tubular assembly, generally indicated by reference numeral 78, comprises a semicylindrical porous electrode 80 and a semicylindrical fluid-impermeable electrically conductive separator 82. The electrode 80 and separator 82 are oppositely oriented in the radial sense and their respective terminating edges meet along boundary edges 84, thus completing the cylindrical enclosure of a reactant gas conduit 86. The separator 82 may be comprised of the same material as the electrode 80 provided that the separator 82 is treated with a suitable sealant or coating such as an impermeable polymeric material to make it non-porous and fluid-impermeable, and provided that a suitable electrical conductor is provided to maintain electrical continuity from one such tubular assembly 78 to adjacent such assemblies in the stack dimension. Otherwise the separator 82 may be made of an impermeable conductive material; the usual constraints apply to bare metal, which is to be avoided in order to avoid fuel cell poisoning. The electrode 80 of the tubular assembly 78 has an inside surface 88 in contact with the flowing reactant fluid within the conduit 86 and an outside surface 90 which is accessible by the flowing reactant by diffusion or migration through the porous material of the electrode 80. A quantity of electrocatalytic particles 91 are embedded in the outside surface 90 of the electrode 80, providing the catalytic sites for the electrochemical reaction that occurs at the electrode in question. The electro-catalytic particles are electrically conductive and in electrical contact with the porous material comprising the electrode 80, which in this embodiment is also electrically conductive.

The electrode 80 of the tubular assembly 78 in which electrocatalytic particles 91 are embedded is further covered with polymeric ion-exchange material to form an electrolyte membrane 92 on the completed tubular assembly 78. The membrane 92 is substantially fluid-impermeable and overlaps the fluid-impermeable separator 82 so that together with the tubular assembly 78 an impermeable jacket for the conduit 86 that is provided that is substantially impermeable to fluid flow in the radial direction, while allowing fluid to flow freely in the axial direction of the tubular assembly 78.

In Figure 1, the conduit 86 of the tubular structure 78 is shown as being completely hollow for unimpeded fluid flow therethrough. In a further embodiment of the tubular structure according to this invention, as shown in Figure 2, the conduit 86 in a tubular structure 96 (otherwise identical to the tubular structure 78 of Figure 1) is either formed from or filled with a suitable porous material 94 such as a particle bed of porous graphite sponge material, which provides structural strength to the tubular assembly while permitting reactant gas to flow therethrough to the electrode layer 80.

Further, the porous material 94 of the embodiment illustrated in Figure 2 may be comprised of an electrically conductive material (one example being the porous graphite sponge material mentioned above) so that the porous material 94 provides an additional conductive path for current from the electrocatalytic particles 91 and the electrode 80 to the electrically conductive, fluid- impermeable separator 82. This embodiment of Figure 2 may be assembled from a porous rod of a suitable electrically conductive material such as porous graphite, a portion (about half as seen in the example of Figure 2) of the radial surface of which is treated with a polymeric material to form the fluid-impermeable separator 82 (which does not require any substantial thickness for structural integrity - structural support is supplied by the porous filler 94, so the only requirement of separator 82 is impermeability to the reactant gas). The remaining radial surface of the rod is treated by embedding a quantity of electrocatalytic particles 91 into the outside surface 90 of the electrode 80 (the lower surface as seen in Figure 2). The porous electrode layer 80 is then coated with polymeric ion-exchange material to form the electrolytic membrane 92. In the following discussion it should be understood that references to the tubular structure 78 apply *mutatis mutandis* to the alternative tubular structure 96.

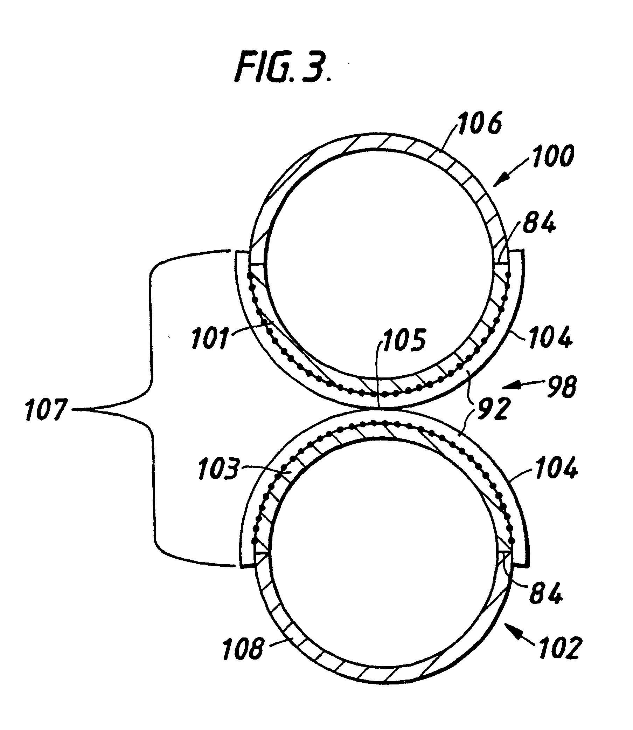

A unitary fuel cell 98 may be formed, as illustrated in Figure 3, when two tubular assemblies 100, 102, each comprised of a tubular structure 78 of the type illustrated in Figure 1 and a membrane 92, are oriented in mutually radially opposite directions and brought into contact along at least a portion 105 of the outer surfaces 104 of the membranes 92 of each tubular assembly 100, 102. The resulting unitary fuel cell 98 then comprises (1) a layered MEA structure, indicated by bracket 107, having membranes 92, a cathode electrode 101, and an anode electrode 103; (2) a cathode separator 106; and (3) an anode separator 108. When oxidant flows through tubular assembly 100 and fuel flows through tubular assembly 102, and provision is made for electrical contact through some external circuit (not shown) between cathode separator 106 and anode separator 108, a current generated by the fuel cell 98 will flow through the external circuit. The idealized unitary fuel cell 98 would, if constructed, be impractical due to the minimal contact between the outer surfaces 104 of the membranes 92; a discussion of practical designs utilizing the principles discussed in relation to Figures 1 - 3 follows.

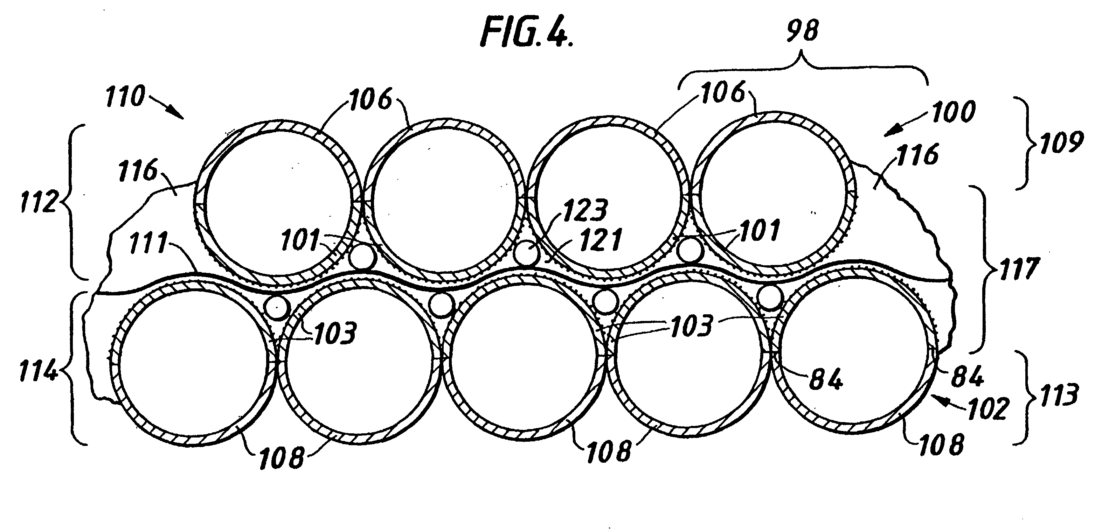

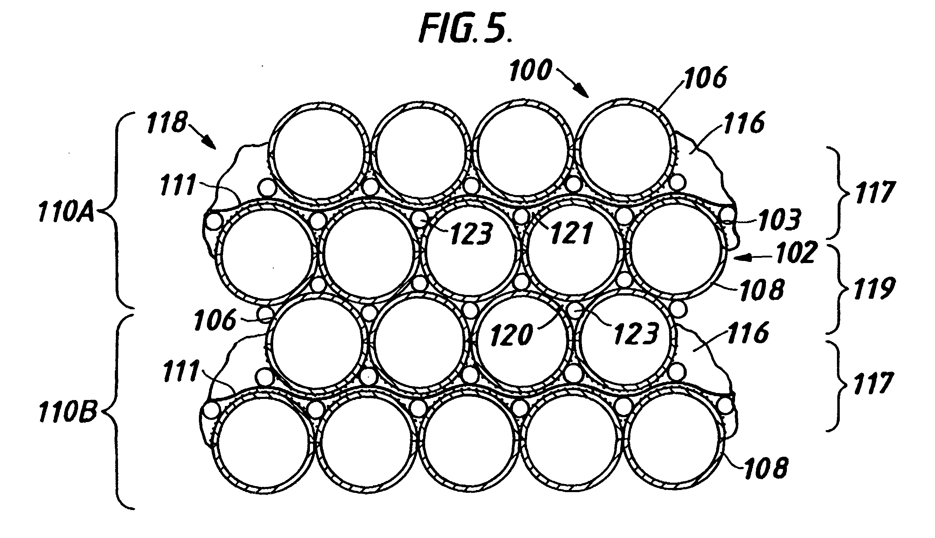

In practice, several such unitary fuel cells 98 are placed physically and electrically in parallel, as shown in Figure 4, to provide higher currents and to form a composite transverse tubular fuel cell layer 110 comprised of a layer 112 of oxidant-carrying tubular assemblies and a layer 114 of fuel-carrying tubular assemblies, and also in series in the stack dimension as illustrated in Figure 5 in order to provide higher voltage.

It will be noted that if layer 112 is transversely offset from the layer 114 as illustrated in Figure 4, the thickness of the fuel cell layer 110 is minimized, while the area of the electrodes 101, 103 of the tubular assemblies in direct contact with reactant gas remains constant or is increased. The capability of simultaneously reducing cell thickness while increasing the active area of the cell will influence the choice of the shape of tubular elements chosen, so as to maximize these benefits. Rather than forming layers 112, 114 from unitary structures 98, each layer 112, 114 may be formed separately by bonding together tubular structures each corresponding to tubular structure 78 along boundary lines 84 as illustrated in Figure 4.

The separators 106 of layer 112 form a cathode separator layer 109 and the separators 108 of layer 114 form an anode separator layer 113. The electrodes 101, 103 of each layer 112, 114 are then coated with a solution or suspension of polymer electrolyte, the two layers 112, 114 pressed together, and the solution or suspension allowed to form a gel membrane 116, which together with the electrodes 101, 103 comprises a layered MEA structure 117. Note that in order to avoid a short circuit, it is essential that the electrodes 101 be spaced apart from the electrodes 103 over the entire transverse width of the fuel cell array of Figure 4, and that in order to provide relatively efficient fuel cell operation, polymer electrolyte must be present between the entirety of the opposed surface areas of electrodes 101, 103. In order to stabilize the membrane 116 within this structure and to prevent the electrodes 101, 103 from short- circuiting, a large scale (coarse) mesh 111 may be required between the electrodes 101, 103. The mesh 111 can be made of any inert and non-conductive material such as TEFLON™. The gel membrane 116 then fills the openings in the mesh 111. Since the gel membrane 116 completely fills the gaps 121 between the tubular elements, humidification conduits 123 are surrounded by and embedded within the gel membrane 116 of the fuel cell, thereby providing direct internal humidification of the gel membrane 116.

Provided that the separator layers 109, 113 are electrically conductive, tubular fuel cell layers 110, as shown in Figure 4, may be stacked, and thus connected electrically in series, to increase the voltage produced by the fuel cell stack. In Figure 5 a fuel cell layer stack, generally indicated by reference numeral 118, is formed from tubular fuel cell layers 110A and 110B. Note that channels 120 are formed between two consecutive tubular fuel cell layers 110A and 110B in composite separator stratum 119. Channels 120 may be used to pass such other fluids as a coolant therethrough, in which case it may be desirable to provide coolant conduits 122 within the channels 120 as illustrated in Figure 5.

The irregular shape of the layered MEA structures 117 also makes it possible to insert porous tubular elements 123 in the roughly triangular portion 121 of the membrane 116 between the electrodes 101, 103 and the mesh 111. The tubular elements 123 can then carry a humidification gas stream to provide direct internal humidification of the MEA structure 117.

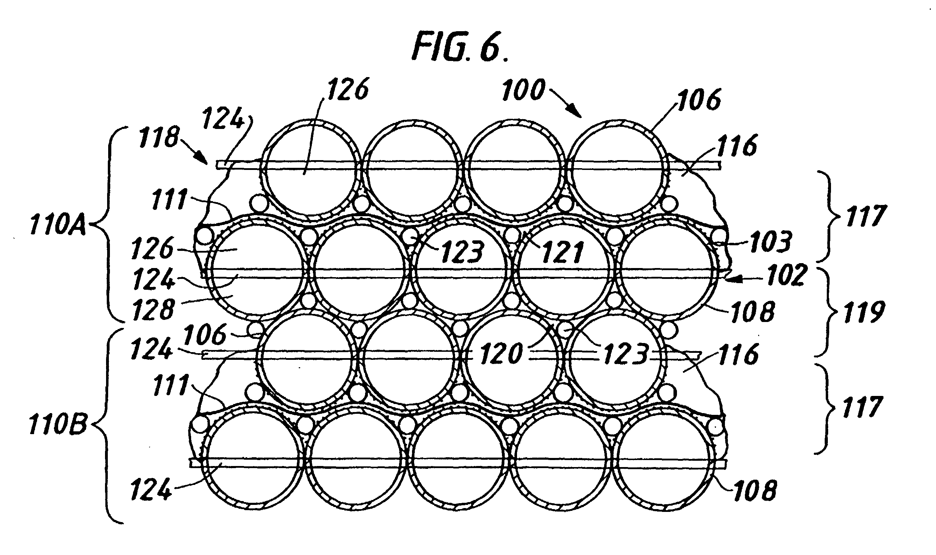

Figure 6 illustrates a second possibility for additional providing cooling to a stacked series of tubular fuel cell layers 110A, 110B, if necessary. In Figure 6, fluid-impermeable planar separator plates 124 have been added between separators 106 and electrodes 101 and between separators 108 and electrodes 103 of Figure 5, dividing the reactant conduits into semicylindrical conduits 126, 128 for reactant gases and coolant respectively. One could alternatively design undulate plates (not shown) in substitution for planar separator plates 124 that would augment the volume of the semicylindrical conduits 126 available for reactant gas and reduce the volume of the conduits 128 available for coolant flow.

An important aspect of the means of internal cooling described here is that the coolant is isolated from the electrochemically reactive components of the fuel cell stack. This means that cooling materials can be selected for the specific purpose of effective cooling, without having to consider the usual constraints that apply in conventional fuel cell stack designs, where the coolant is exposed to electrochemically reactive stack components.

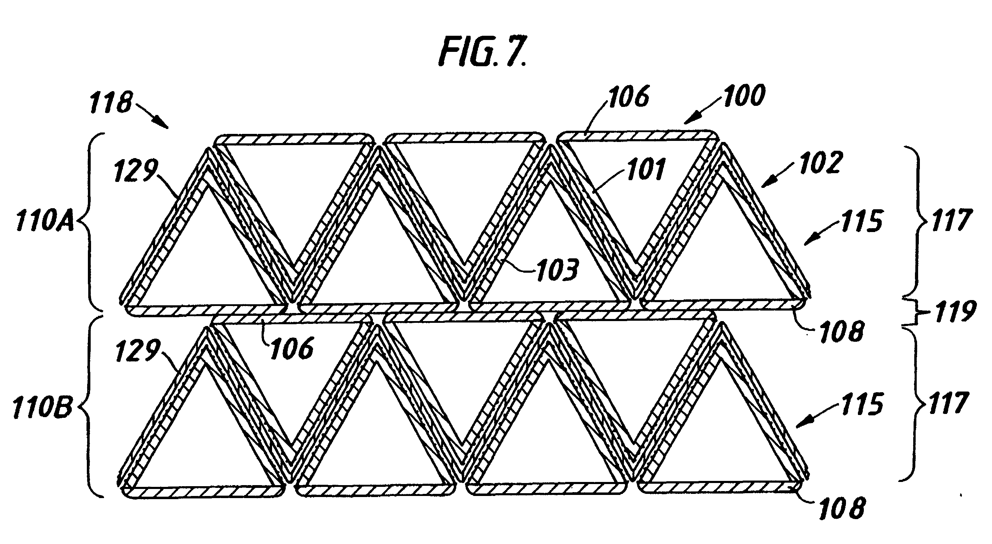

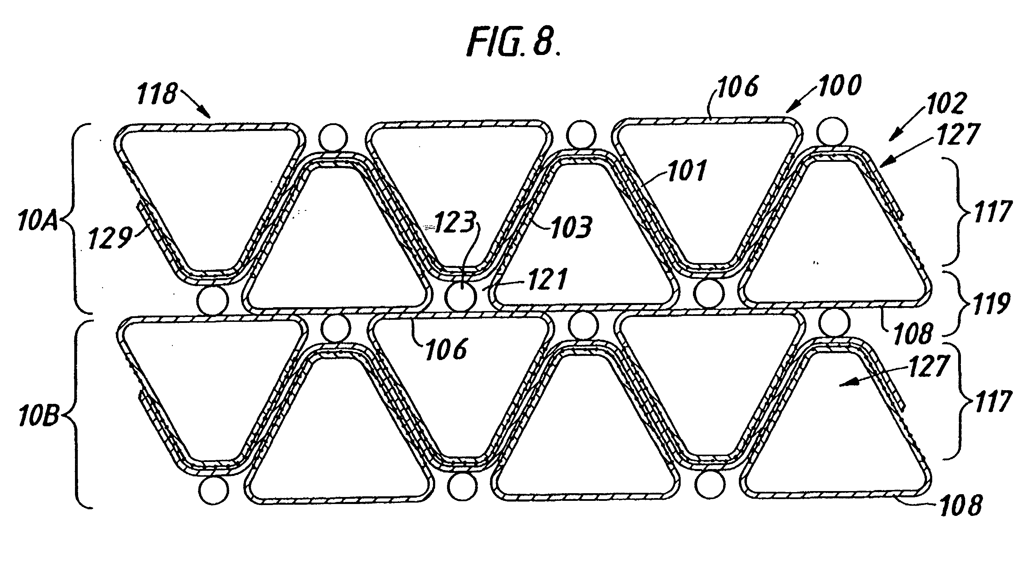

It will be recognized that the present invention in the embodiments shown in Figures 1 - 6 is not limited to tubular assemblies of circular cross-section. Triangular, rectangular, or other cross-sectional shapes, including irregular shapes, may be used to advantage in certain designs. For example, Figure 7 illustrates the use of triangular cross-section tubular assemblies, which are generally indicated by reference numeral 115. Such tubular assemblies 115 are topologically equivalent to the circular cross-section tubular assemblies illustrated in Figures 1 - 6. Topologically equivalent elements are labeled with the same reference numerals in Figures 5 and 7. For example, oxidant carrying tubular assemblies 100 and fuel carrying tubular assemblies 102 shown in Figure 7 correspond to equivalent elements in Figure 5 labeled with the same reference numerals. The element in Figures 7 and 8 that is functionally equivalent to the gel membrane 116 and mesh 111 of Figures 4 - 6 is membrane 129, which may be comprised of a gel membrane and mesh or may be conventional MEA sheet material.

Tubular assemblies 115 of triangular cross-section appear to be spatially more efficient than tubular assemblies 78 of circular cross-section, as the volume occupied by the membrane material 129 between the tubular assemblies 115 in the triangular cross-section design shown in Figure 7 is less than the volume occupied by the membrane material 116 between the tubular assemblies 78 in the circular cross-section design shown in Figure 5, and there is no unutilized space. (However, the Figure 7 structure would have to be modified as discussed below in relation to Figure 8 to provide space for coolant conduits such as the conduits 122 shown in Figure 5). The additional membrane material 116 that tends to be present in the circular cross-section design of Figure 4 is inefficient, rendering the Figure 4 structure relatively inefficient in its use of space as compared with triangular and trapezoidal cross-sectional configurations.

Cooling or humidification conduits or both may be incorporated in a design with efficient use of space using trapezoidal cross-section tubular elements 127 which are offset with respect to one another as illustrated in Figure 8. Topologically equivalent elements are labeled with the same reference numerals in Figures 7 and 8. The space 124 gained by using trapezoidal elements rather than the triangular elements of Figure 7 can be used to incorporate conduits 125, which may be used for cooling and/or humidification. This example illustrates how simple tubular members can be shaped appropriately and built up to obtain both high density packing of flow channels and membrane with relatively simple manufacturing methods.

Alternatives to the use of a gel membrane, such as the use of conventional planar sheet membrane, are possible, particularly in structures such as those illustrated in Figures 7 and 8. In both Figures the distance between those tubes forming anode surfaces and those tubes forming cathode surfaces is constant. This means that a suitable sheet membrane material may be inserted between the layers to complete the fuel cell function. This is in contrast to the topology of Figures 4 - 6 in which the distance between opposing electrodes is not constant, thus requiring the formation of the membrane layer 116 in-situ. As a result of this distinction, the Figure 7 and 8 embodiments do not show the use of the coarse mesh 111 as this mesh is no longer required due to the inherent stability of membrane sheet material. The design shown in Figure 8 has the advantage that the maximum radius of curvature of the MEA 117 is reduced as compared to the design of Figure 7, an advantage if conventional planar sheet membrane 129 shown in Figure 8 is used in place of a mesh and gel membrane. The degree of bending to which an initially planar membrane may be subject is dependent upon the exact nature of the material itself and the degree to which it has been treated before insertion into the fuel cell. Decisions concerning these issues are up to the discretion of the designer.

Although the embodiments of Figures 4-8 show fuel and oxidant flow channels formed of the same dimensions from apparently similar tubular structures, it should be recognized that the fuel cell stack may be composed of tubular elements of different materials and different dimensions with the materials and dimensions chosen according to their suitability for particular aspects of fuel cell operation. The selection of tubular dimensions and shapes must be done carefully, so that fuel and oxidant carrying tubes mesh together in such a way as to create an efficient use of space while achieving the objectives of an optimal fuel cell design.

Fuel cells in accordance with the present invention offer the advantages of reduced weight and cost, by virtue of a reduction, relative to conventional fuel cells, in materials used in the fuel cell fabrication and the opportunity to manufacture the fuel cell components in a continuous extrusion process. Fuel cells of varying size and power output can be manufactured by cutting the extrusion to the desired length, stacking the tubular elements in appropriate forms and affixing fluid manifolds (not shown) to the exposed axial ends of the fuel cell layers. A wide variety of manifolding strategies are available, due to the easy access to the ends of the reactant conduits and because of the separation of all flows into independent discrete channels.

Hydrogen may be used as a fuel gas in a fuel cell stack formed of fuel cell layers in accordance with the invention. In Figures 5 - 7 portions of exemplary fuel cell stacks 118 are shown as made up of tubular fuel cell layers 110A, 110B. Each fuel cell stack is connectable via a cathode terminal (not shown) and an anode terminal (not shown) to an external load (not shown). Each tubular fuel cell layer 110A, 110B includes a discrete MEA layer 117 and is associated with two of the reactant-gas impermeable composite separator strata 119. Each MEA layer 117 has a porous anode electrode 103, a porous cathode electrode 101, an electrolytic membrane layer 116 or 129 disposed between the two electrodes 101. 103, an anode electro-catalyst layer (shown in Figure 5 - 7 without a reference numeral) disposed between the electrolytic membrane layer 116 or 129 and the anode electrode 103, and a cathode electro-catalyst layer (shown in Figure 5 - 7 without a reference numeral) disposed between the electrolytic membrane layer 116 or 129 and the cathode electrode 103. One side of one associated separator layer 119 in conjunction with the MEA layer 117 provides at least one flowpath of a flow field for hydrogen and one side of the other associated separator layer 119 in conjunction with the MEA layer 117 provides at least one flowpath of a flow field for a selected oxidant. The flowpaths are constituted over their greater length by parallel transversely spaced and longitudinally extending flow channels interconnected in the vicinity of their ends to form the flowpaths. Each MEA layer 117 is installed in the stack between the associated composite separator layers 119 so that the side of the composite separator layer 119 that in conjunction with the MEA layer 117 provides flow channels of a flow field for hydrogen faces and is in contact with the anode side of the MEA layer, whilst the side of the separator layer provides flow channels of a flow field for oxidant faces and is in contact with the cathode side of the MEA layer 117, so that the hydrogen flow channels are closed to form a conduit for supplying hydrogen to the MEA layer 117 and the oxidant flow channels are interconnected in the manner described above to form a conduit for supplying oxidant to the MEA layer 117. The fuel cells are stacked in sequence and the anode electrode of the fuel cell at one extremity of the stack electrically is connected to the anode terminal, the cathode electrode of the fuel cell at the other extremity of the stack electrically is connected to the cathode terminal, and the anode electrode of each of the other fuel cells in the stack are electrically connected to the cathode electrode of the next adjacent fuel cell. When the anode terminal and cathode terminal are electrically connected through an external load and for each fuel cell hydrogen is supplied to the hydrogen conduit and oxygen is supplied to the oxidant conduit, then in each fuel cell hydrogen moves from the hydrogen flow field through the anode electrode and is ionized at the anode electro-catalyst layer to yield electrons and hydrogen ions, the hydrogen ions migrate through the electrolytic membrane layer to react with oxygen that has moved from the oxidant flow field through the cathode to the cathode electro-catalyst layer and with electrons that have moved from the anode electrode electrically connected to the cathode electrode, thereby to form water as a reaction product, and a useful current of electrons is thereby produced through the load.

While particular elements, embodiments and applications of the present invention have been shown and described, it will be understood, of course, that the invention is not limited thereto, since modifications may be made by those skilled in the applicable technologies, particularly in light of the foregoing description. The appended claims include within their ambit such modifications and variants of the exemplary embodiments of the invention described herein as would be apparent to those skilled in the applicable technologies.

## Claims

1. A PEM-type fuel cell stack comprising a series of MEA (107) and separator layers (106, 108) alternating with one another and stacked together in mechanical and electrical contact, and including conduits for flow of reactant gases from external sources to electrochemically active regions of the MEA layers and conduits for coolants, each MEA layer including an electrolytic membrane (92) sandwiched between anode (103) and cathode (101) layers; **characterised in that** at least the boundary portions of each separator layer and of the MEA layers associated therewith are formed by a series of generally parallel tubular elements (100, 102) closely packed beside one another, each said tubular element extending longitudinally in the flow dimension.

2. A PEM fuel cell stack as defined in claim 1, wherein flow of coolant is provided either through selected ones of said tubular elements (101, 102) of through conduits formed in or by the interstitial spaces (120) between adjacent tubular elements.

3. A PEM fuel cell stack as defined in claim 1 or 2, wherein the tubular elements (101, 102) are of identical cross-sectional dimensions and shape.

4. A PEM fuel cell stack as defined in claim 3, wherein the tubular elements (101, 102) are of circular cross-section.

5. A PEM fuel cell stack as defined in claim 3, wherein the tubular elements (126, 128) are of semicircular cross-section.

6. A PEM fuel cell stack as defined in claim 3, wherein the tubular elements (127) are of trapezoidal cross-section.

7. A PEM fuel cell stack as defined in any of claims 3 to 6, additionally comprising humidification conduits (123, 125) located in selected interstitial spaces between adjacent ones of said tubular elements.

8. A PEM fuel cell stack as defined in claim 3, wherein the tubular elements (101, 102) are of triangular cross-section.

9. A PEM fuel cell stack as defined in any of claims 3 to 5, wherein successive transverse arrays are transversely offset from one another by about half the transverse width of one of said tubular elements (101, 102), thereby to facilitate the minimisation of the stack dimension of the fuel cell.

10. A PEM fuel cell stack as defined in any of the preceding claims, wherein the tubular elements (101, 102) are cut to length from tubular stock of axial dimension sufficient for the manufacture of a plurality of such tubular elements.

11. A PEM fuel cell stack as defined in any of the preceding claims, wherein the electrolytic membrane (116) of each transverse fuel cell array is formed in place.

12. A PEM fuel cell stack as defined in any of the preceding claims, wherein the electrolytic membrane (116) of each transverse fuel cell array is formed by cutting to width and length a layer of membrane material and then placing and bending the membrane to follow the curvature of the tubular elements between which the membrane is located.

13. For use in a fuel cell stack comprising a series of stacked repeating fuel cell subassemblies, a fuel cell stack subassembly comprising:
an MEA structure (117) extending generally in dimensions perpendicular to the stack dimension; and
a first reactant gas-impermeable separator stratum (106) extending generally in dimensions perpendicular to the stack dimension, lying adjacent the layered MEA structure on one side thereof, and in non-continuous physical and electrical contact therewith so as to form a plurality of conduits between the layered MEA structure and the first separator stratum for flow of a first reactant gas therethrough,
a second reactant gas-permeable separator stratum (108) extending generally in dimensions perpendicular to the stack dimension, lying adjacent the layered MEA structure on the other side thereof, and in non-continuous physical and electrical contact therewith so as to form at least one discrete conduit between the layered MEA structure and the second separator stratum for flow of a second reactant gas therethrough,
the layered MEA structure comprising a reactant gas-impermeable ion-exchange membrane layer (116), sandwiched between the two reactant gas-permeable electrically conductive current collector layers (101, 103) and a discrete layer of electro-catalyst particles between the membrane and each current collector,
each one of current collector layers (101, 103) comprising a discrete plurality of parallel congruent semicylinders, the semicylinders arranged in side-by-side contact in an array such that the points of contact between successive semicylinders are at the ends of the arcs of the semicylindrical surfaces and lie in a plane perpendicular to the stack direction, and the concave surface of each semicylinder facing the same side of that plane and away from the membrane, so that the convex sides of the semicylinder of both current collector layers face the membrane layer,
the first separator stratum providing at least one electrically conductive path from the current collector in contact with first separator stratum through the first separator stratum to the side thereof opposite the side in contact with the current collector, and
the second separator stratum providing at least one electrically conductive path from the current collector in contact with second separator stratum through the second separator stratum to the side thereof opposite the side in contact with the current collector.

14. A fuel cell stack subassembly as defined in claim 13, wherein each separator stratum is a plurality of parallel semicylinders each congruent with the current collector semicylinders and tangent to the current collector so that each semicylinder of the separator strata together with a discrete semicylinder of the current collector forms a cylindrical reactant conduit and a layer of parallel cylindrical reactant conduits is formed.

15. A fuel cell stack subassembly as defined in claim 14, wherein each layer of conduits is transversely offset by a distance substantially equal to the radius of the conduits and packed against each other layer in the stack dimension so as to minimise the thickness of the fuel cell stack subassembly in the stack dimension.

16. A fuel cell stack subassembly as defined in either of claims 14 and 15, additionally comprising a planar fluid-impermeable separator plate (124) disposed between the semicylinders of one of separator strata and the adjacent current collector semicylinders so that each semicylinder of that separator strata together with the separator plate forms a semicylindrical coolant conduit and each current collector semicylinder together with the separator plate forms a semicylindrical reactant conduit.

17. A fuel cell stack subassembly as defined in either of claims 12 and 15, additionally comprising a non-planar fluid-impermeable separator plate (124) disposed between the semicylinders of one of separator strata and the adjacent current collector semicylinders so that each semicylinder of that separator strata together with the separator plate forms a coolant conduit and each current collector semicylinder together with the separator plate forms a reactant conduit, the reactant conduit differing in volume from the coolant conduit so formed.

18. A fuel cell stack comprised of at least two of the subassemblies as defined in claim 15, stacked in the stack dimension, each subassembly transversely offset by a distance substantially equal to the radius of the conduits and packed against each adjacent subassembly in the stack dimension so as to minimize the thickness of the fuel cell stack in the stack dimension.

19. A fuel cell stack as defined in claim 18, additionally comprising at least one coolant conduit disposed in channels formed between two consecutive subassemblies.

20. A fuel cell stack subassembly that is topologically equivalent to the fuel cell stack subassembly defined in claim 14.

21. The fuel cell stack subassembly as defined in claim 20, wherein the reactant conduits have a triangular cross-section.

22. The fuel cell stack subassembly as defined in claim 20, wherein the reactant conduits have a trapezoidal cross-section.

23. A fuel cell stack subassembly as defined in either of claims 21 or 22 wherein the conduits of each layer of conduits are transversely offset and rotated with respect to the conduits of adjacent layers of conduits and packed against each other in the stack dimension so as to minimize the thickness of the fuel cell stack subassembly in the stack dimension.

24. A fuel cell stack comprising
(i) a stack of contiguously stacked pairs of contiguous layers, each said pair comprising a separator stratum (119) and a contiguous membrane electrode assembly (MEA) layer (117), such that in the stack, substantially identical separator strata alternate with contiguous substantially identical MEA strata;
(ii) means within the stack for providing electrical contact between successive ones of said MEA strata; and
(iii) means to maintain the layers in alignment;
said layers being configured to form therebetween a plurality of stacked conduits extending generally parallel to one another in the flow dimension;
each said layer having extension in the transverse dimension and having extension in the flow dimension and being substantially invariant in the flow dimension;
at least one of the layers in each interior pair of said pairs being an undulate layer, said undulate layer having limited extension in the stack dimension and extending transversely from one transverse boundary thereof to the other transverse boundary thereof in a transverse sequence of undulations, the peaks of which undulations are each in contact with an associated aligned portion of the other layer in the pair over a contact area having substantial continuous extension in the flow dimension and limited extension in the transverse dimension, and the troughs of which undulations are each in contact with an associated aligned portion of the alternate layer in the next adjacent pair over a contact area having substantial continuous extension in the flow dimension and limited extension in the transverse dimension, thereby to form a pair of arrays of contact areas, said contact area arrays being spaced from one another in the stack dimension, each said contact area array comprised of transversely spaced contact areas extending generally parallel to one another in the flow dimension, said layers and said contact areas forming said plurality of stacked conduits, each said conduit being bounded by those portions of adjacent ones of said layers lying between successive contact areas in the same contact array,
wherein the layers form a stacked array of tubes lying generally parallel to one another in the flow dimension, each tube comprised of a first portion formed by at least a portion of an associated one of said separator strata and a second portion formed by at least a portion of an associated one of said MEA strata.

25. The fuel cell stack of claim 24, wherein the means within the stack for providing electrical contact between successive ones of said MEA strata includes electrically conductive material located in the said contact areas.

26. The fuel cell stack of claim 24 or 25, wherein the tubes are arranged in a stacked sequence of contiguous generally planar tube arrays, each said tube array having extension in the flow dimension and in the transverse dimension, each interior one of said tube arrays being transversely displaced by half a tube width in the transverse dimension from the two tube arrays contiguous therewith, and wherein one of the layers of each pair is formed of the first portions of tubes lying in an associated tube array and of the second portions of tubes in a tube array contiguous with said associated tube array, and the other of the layers of each pair is formed of the second portions of tubes lying in an associated tube array and of the first portions of tubes in a tube array contiguous with said associated tube array.

27. The fuel cell stack of claim 26, wherein the tubes are of hollow circular cylindrical shape and the first portion of each said tube lies on one side of a diameter of the cylinder and the second portion of each said tube lies on the other side of the diameter of the cylinder.

28. The fuel cell stack of claim 27, additionally comprising at least one coolant conduit disposed in channels formed between the first portions of the tubes of each separator strata.

29. The fuel cell stack of claim 24 or claim 25, wherein the undulations are generally of triangular-wave configuration.

30. The fuel cell stack of claim 24 or claim 25, wherein the undulations are generally of sinusoidal configuration.

31. The fuel cell stack of any of claims 24 to 30, wherein each said contact area array is a generally planar array having extension in the flow dimension and in the transverse dimension.

32. The fuel cell stack of any of claims 24 to 31, wherein a layer in each pair of transversely undulate configuration is one of said separator strata.

33. The fuel cell stack of any of claims 24 to 32, wherein the separator strata are electrically conductive.

34. The fuel cell stack of claim 33, wherein the means within the stack for providing electrical contact between successive ones of said MEA strata comprises the separator strata and the contact areas.

35. The fuel cell stack as defined in any of claims 24 to 34, wherein each tube is divided by a discrete fluid-impermeable separator plate (124) to form a coolant conduit bounded by the first portion of the tube and the separator plate and a reactant conduit bounded by the second portion of the tube and the separator plate.

36. The fuel cell stack as defined in any of claims 24 to 34, wherein the tubes in each tube array are divided by a fluid-impermeable separator plate (124) to form in each tube a discrete coolant conduit bounded by the first portion of the tube and the separator plate and a discrete reactant conduit bounded by the second portion of the tube and the separator plate.

37. The fuel cell stack as defined in either of claims 35 and 36, wherein the separator plate (124) is planar.

## Patentansprüche

1. Brennstoffzellenstapel vom PEM-Typ mit einer Reihe von MEA- (107) und Separatorschichten (106, 108), die einander abwechseln und in mechanischem und elektrischem Kontakt aufeinander gestapelt sind, und mit Leitungen für den Fluss von Reaktionsgasen von externen Quellen zu elektrochemisch aktiven Bereichen der MEA-Schichten und mit Leitungen für Kühlmittel, wobei jede MEA-Schicht eine elektrolytische Membran (92) aufweist, die sandwichartig zwischen Anoden-Schichten (103) und Kathodenschichten (101) aufgenommen ist;
**dadurch gekennzeichnet,**
**dass** wenigstens die Grenzabschnitte einer jeden Separatorschicht und der dieser zugeordneten MEA-Schichten von einer Reihe von im Wesentlichen parallelen rohrförmigen Elementen (100, 102) gebildet werden, die eng aneinander gepackt sind, wobei jedes rohrförmige Element sich längs zur Fließrichtung erstreckt.

2. Ein PEM-Brennstoffzellenstapel nach Anspruch 1, in welchem der Kühlmittelstrom entweder durch ausgewählte von den rohrförmigen Elementen (101, 102) oder durch Durchflussleitungen, die in oder durch Zwischenräume (120) zwischen benachbarten rohrförmigen Elementen ausgebildet sind, geschaffen wird.

3. PEM-Brennstoffzellenstapel nach Anspruch 1 oder 2, in welchem die rohrförmigen Elemente (101, 102) von identischen Querschnittsabmessungen und -form sind.

4. PEM-Brennstoffzellenstapel nach Anspruch 3, in welchem die rohrförmigen Elemente (101, 102) von kreisförmigem Querschnitt sind.

5. PEM-Brennstoffzellenstapel nach Anspruch 3, in welchem die rohrförmigen Elemente (126, 128) von halbkreisförmigem Querschnitt sind.

6. PEM-Brennstoffzellenstapel nach Anspruch 3, in welchem die rohrförmigen Elemente (127) von trapezförmigem Querschnitt sind.

7. PEM-Brennstoffzellenstapel nach einem der Ansprüche 3 bis 6, zusätzlich aufweisend Befeuchtungsleitungen (123, 125), die in ausgewählten Zwischenräumen zwischen benachbarten rohrförmigen Elementen angeordnet sind.

8. PEM-Brennstoffzellenstapel nach Anspruch 3, in welchem die rohrförmigen Elemente (101, 102) von dreieckigem Querschnitt sind.

9. PEM-Brennstoffzellenstapel nach einem der Ansprüche 3 bis 5, in welchem aufeinander folgende transversale Felder um ungefähr die Hälfte der Breite eines rohrförmigen Elementes (101, 102) zueinander versetzt sind, wodurch die Verkleinerung der Stapeldimensionen der Brennstoffzelle vereinfacht wird.

10. PEM-Brennstoffzellenstapel nach einem der vorstehenden Ansprüche, in welchem die rohrförmigen Elemente (101, 102) aus einem rohrförmigen Vorrat von axialer Dimension genügend für die Herstellung von mehreren derartigen rohrförmigen Elementen auf Länge abgeschnitten werden.

11. PEM-Brennstoffzellenstapel nach einem der vorstehenden Ansprüche, in welchem die elektrolytische Membran (116) eines jeden transversalen Brennstoffzellenfeldes an Ort und Stelle ausgebildet wird.

12. PEM-Brennstoffzellenstapel nach einem der vorstehenden Ansprüche, in welchem die elektrolytische Membran (116) eines jeden transversalen Brennstoffzellenfeldes durch Ausschneiden der Breite und Länge einer Schicht von Membranmaterial gebildet wird und dann die Membran platziert und gebogen wird, um der Krümmung der rohrförmigen Elemente zu folgen, zwischen denen die Membran angeordnet ist.

13. Zur Verwendung in einem Brennstoffzellenstapel, aufweisend eine Reihe von gestapelt wiederholten Brennstoffzellen-Unteranordnungen, weist eine Brennstoffzellen-Unteranordnung auf:
eine MEA-Struktur (117), die sich im Wesentlichen in einer Dimension senkrecht zur Stapeldimension erstreckt; und
eine erste reaktionsgasundurchlässige Separatorfolie (106), die sich im Wesentlichen in eine Richtung senkrecht zur Stapelrichtung erstreckt und benachbart zur geschichteten MEA-Struktur auf einer von deren Seiten und in nicht kontinuierlichem physikalischem und elektrischem Kontakt mit dieser liegt, um eine Vielzahl von Leitungen zwischen der geschichteten MEA-Struktur und der ersten Separatorfolie zu bilden, für einen Durchfluss eines ersten Reaktionsgases,
eine zweite reaktionsgasdurchlässige Separatorfolie (108), die sich im Wesentlichen in eine Richtung senkrecht zur Stapelrichtung erstreckt und benachbart zur geschichteten MEA-Struktur auf deren anderen Seite und in nicht kontinuierlichem physikalischem und elektrischem Kontakt mit dieser liegt, um wenigstens eine diskrete Leitung zwischen der geschichteten MEA-Struktur und der zweiten Separatorfolie zu bilden, für einen Durchfluss eines zweiten Reaktionsgases,
wobei die geschichtete MEA-Struktur eine reaktionsgasundurchlässige lonenaustauscher-Membranschicht (116) sandwichartig zwischen zwei reaktionsgasdurchlässigen elektrisch leitfähigen Stromkollektorschichten (101, 103) und einer diskreten Schicht von elektrokatalytischen Partikeln zwischen der Membran und jedem Stromkollektor aufweist,
jede der Stromkollektorschichten (101, 103) eine diskrete Mehrzahl von parallelen kongruenten Halbzylindern aufweist, wobei die Halbzylinder in einem Seite an Seite liegenden Kontakt mit einem Feld derart angeordnet sind, dass die Kontaktpunkte zwischen aufeinander folgenden Halbzylindern an den Enden der Bögen der Halbzylinderoberflächen und in einer Ebene senkrecht zur Stapelrichtung liegen, und die konkave Oberfläche eines jeden Halbzylinders der gleichen Seite der Ebene gegenüber und abgewandt von der Membran liegt, so dass die konvexen Seiten der Halbzylinder von beiden Stromkollektorschichten der Membranschicht gegenüber liegen,
die erste Separatorfolie wenigstens einen elektrisch leitfähigen Pfad von dem Stromkollektor in Kontakt mit der ersten Separatorfolie durch die erste Separatorfolie zu derjenigen von ihren Seiten gegenüber der Seite in Kontakt mit dem Stromkollektor bildet, und
die zweite Separatorfolie wenigstens einen elektrisch leitfähigen Pfad von dem Stromkollektor in Kontakt mit der zweiten Separatorfolie durch die zweite Separatorfolie zu derjenigen von ihren Seiten gegenüber der Seite in Kontakt mit dem Stromkollektor bildet.

14. Brennstoffzellenstapel-Unteranordnung nach Anspruch 13, in welcher jede Separatorfolie aus mehreren parallelen Halbzylindern besteht, die jeweils kongruent mit den Stromkollektor-Halbzylindern sind und den Stromkollektor tangieren, so dass jeder Halbzylinder der Separatorfolie zusammen mit einem diskreten Halbzylinder des Stromkollektor eine zylindrische Reaktionsleitung bildet und eine Schicht von parallelen zylindrischen Reaktionsleitungen gebildet wird.

15. Brennstoffzellenstapel-Unteranordnung nach Anspruch 14, in welchem jede Schicht von Leitungen transversal um eine Distanz versetzt ist, die im Wesentlichen gleich dem Radius der Leitungen ist und gegen jede Schicht in der Stapelrichtung gepackt ist, so dass die Dicke der Brennstoffzellenstapel-Unteranordnung in der Stapelrichtung minimiert wird.

16. Brennstoffzellenstapel-Unteranordnung nach einem der Ansprüche 14 oder 15, zusätzlich aufweisend eine ebene fluidundurchlässige Separatorplatte (124), die derart zwischen den Halbzylindern einer Separatorfolie und den benachbarten Stromkollektor-Halbzylindern angeordnet ist, dass jeder Halbzylinder der Separatorfolie zusammen mit der Separatorplatte eine halbzylindrische Kühlmittelleitung bildet und jeder Stromkollektor-Halbzylinder zusammen mit der Separatorplatte eine halbzylindrische Reaktionsmittelleitung bildet.

17. Brennstoffzellenstapel-Unteranordnung nach einem der Ansprüche 14 oder 15, zusätzlich aufweisend eine nicht ebene fluidundurchlässige Separatorplatte (124), die derart zwischen den Halbzylindern einer Separatorfolie und den benachbarten Stromkollektor-Halbzylindern angeordnet ist, dass jeder Halbzylinder der Separatorfolie zusammen mit der Separatorplatte eine Kühlmittelleitung bildet und jeder Stromkollektor-Halbzylinder zusammen mit der Separatorplatte eine Reaktionsmittelleitung bildet, wobei die Reaktionsmittelleitung sich im Volumen von der so gebildeten Kühlmittelleitung unterscheidet.

18. Brennstoffzellenstapel, zusammengesetzt aus wenigstens zwei Unteranordnungen gemäß Anspruch 15, gestapelt in der Stapelrichtung, wobei jede Unteranordnung transversal um eine Distanz versetzt ist, die im Wesentlichen gleich dem Radius der Leitungen ist und gegen jede benachbarte Unteranordnung in der Stapelrichtung gepackt ist, um die Dicke des Brennstoffzellenstapels in der Stapelrichtung zu minimieren.

19. Brennstoffzellenstapel nach Anspruch 18, zusätzlich aufweisend wenigstens eine Kühlmittelleitung, angeordnet in Kanälen, die zwischen zwei aufeinander folgenden Unteranordnungen gebildet sind.

20. Brennstoffzellenstapel-Unteranordnung, die topologisch äquivalent zu der Brennstoffzellenstapel-Unteranordnung aus Anspruch 14 ist.

21. Brennstoffzellenstapel-Unteranordnung nach Anspruch 20, in welcher die Reaktionsleitungen einen dreieckigen Querschnitt besitzen.

22. Brennstoffzellenstapel-Unteranordnung nach Anspruch 20, in welcher die Reaktionsleitungen einen trapezförmigen Querschnitt besitzen.

23. Brennstoffzellenstapel-Unteranordnung nach Anspruch 21 oder 22, in welcher die Leitungen jeder Schicht von Leitungen transversal versetzt und bezüglich der Leitungen der benachbarten Leitungsschichten gedreht sind und gegeneinander in der Stapelrichtung gepackt sind, um die Dicke der Brennstoffzellenstapel-Unteranordnung in der Stapelrichtung zu minimieren.

24. Brennstoffzellenstapel, aufweisend
(i) einen Stapel von aneinander angrenzend gestapelten Paaren von angrenzenden Schichten, wobei jedes Paar eine Separatorfolie (119) und eine angrenzende Membran-Elektrodenanordnung (MEA)-Schicht (117) derart aufweist, dass in diesem Stapel im Wesentlichen identische Separatorfolien sich mit angrenzenden, im Wesentlichen identischen MEA-Folien abwechseln;
(ii) eine Einrichtung innerhalb des Stapels zum Schaffen eines elektrischen Kontaktes zwischen aufeinander folgenden von den MEA-Folien; und
(iii) eine Einrichtung, die die Schichten in Ausrichtung hält;
wobei diese Schichten angeordnet sind, um zwischen sich mehrere gestapelte Leitungen zu bilden, die sich im Wesentlichen parallel zueinander in der Fließrichtung erstrecken;
wobei jede Schicht eine Erstreckung in der transversalen Richtung und eine Erstreckung in der Fließrichtung aufweist und im Wesentlichen invariant in der Fließrichtung ist;
wobei wenigstens eine der Schichten in jedem Zwischenpaar von Paaren eine gewellte Schicht ist, wobei die gewellte Schicht eine begrenzte Erstreckung in der Stapelrichtung hat und sich transversal von ihrer einen transversalen Grenze zu ihrer anderen transversalen Grenze in einer transversalen Abfolge von Wellen erstreckt, deren Höhepunkte jeweils in Kontakt mit einem zugeordneten ausgerichteten Abschnitt der anderen Schicht des Paars über einen Kontaktbereich mit im Wesentlichen kontinuierlicher Erstreckung in der Fließrichtung und einer begrenzten Erstreckung in der transversalen Richtung ist,
und deren Tröge jeweils in Kontakt mit einem zugeordneten ausgerichteten Abschnitt einer abgewechselten Schicht in dem benachbarten Paar über einen Kontaktbereich mit im Wesentlichen kontinuierlicher Erstreckung in der Fließrichtung und einer begrenzten Erstreckung in der transversalen Richtung ist, wodurch ein Paar von Feldern von Kontaktbereichen gebildet wird, wobei diese Kontaktbereichfelder voneinander in der Stapelrichtung beabstandet sind, jedes dieser Kontaktbereichfelder sich zusammensetzt aus transversal beabstandeten Kontaktbereichen, die sich im Wesentlichen parallel zueinander in der Fließrichtung erstrecken, wobei die Schichten und die Kontaktbereiche die Mehrzahl an gestapelten Leitungen bilden, von denen jede Leitung begrenzt wird durch diese Abschnitte von benachbarten der Schichten, die zwischen aufeinander folgenden Kontaktbereichen in demselben Kontaktfeld liegen,
wobei die Schichten ein gestapeltes Feld von Röhren bilden, die im Wesentlichen parallel zueinander in der Fließrichtung liegen, wobei jede Röhre zusammen gesetzt ist aus einem ersten Abschnitt, der von wenigstens einem Abschnitt der zugeordneten Separatorfolie gebildet wird, und einem zweiten Abschnitt, der von wenigstens einem Abschnitt einer zugeordneten MEA-Folie gebildet wird.

25. Brennstoffzellenstapel nach Anspruch 24, in welchem die Einrichtung innerhalb des Stapels zum Schaffen eines elektrischen Kontaktes zwischen aufeinander folgenden MEA-Folien ein elektrisch leitfähiges Material einschließt, das in diesen Kontaktbereichen angeordnet ist.

26. Brennstoffzellenstapel nach Anspruch 24 oder 25, in welchem die Röhren in einer gestapelten Abfolge von angrenzenden, im Wesentlichen ebenen Röhrenfeldern angeordnet sind, von denen jedes Röhrenfeld eine Erstreckung in der Fließrichtung und in der transversalen Richtung aufweist, jede innere von den Röhrenfeldern ist dabei transversal um eine halbe Röhrenbreite in der transversalen Richtung von den beiden Röhrenfeldern versetzt, an die es angrenzt, und in welchem eine der Schichten eines jeden Paares gebildet wird aus den ersten Abschnitten derjenigen Röhren, die in einem zugeordneten Röhrenfeld liegen, und den zweiten Abschnitten von Röhren, die in einem angrenzenden Röhrenfeld zu dem zugeordneten Röhrenfeld liegen, und die andere der Schichten des Paares wird gebildet von den zweiten Abschnitten von Röhren, die in einem zugeordneten Röhrenfeld liegen, und den ersten Abschnitten von Röhren in einem Röhrenfeld, das an das zugeordnete Röhrenfeld angrenzt.

27. Brennstoffzellenstapel nach Anspruch 26, in welchem die Röhren eine Hohlkreiszylinderform besitzen und der erste Abschnitt einer jeden Röhre auf einer Seite des Zylinderdurchmessers liegt und der zweite Abschnitt einer jeden Röhre auf der anderen Seite des Zylinderdurchmessers liegt.

28. Brennstoffzellenstapel nach Anspruch 27, zusätzlich aufweisend wenigstens eine Kühlmittelleitung angeordnet in Kanälen, die von den ersten Abschnitten der Röhren einer jeden Separatorfolie gebildet werden.

29. Brennstoffzellenstapel nach Anspruch 24 oder Anspruch 25, in welchem die Wellen im Wesentlichen eine Dreieck-Wellenkonfiguration aufweisen.

30. Brennstoffzellenstapel nach Anspruch 24 oder Anspruch 25, in welchem die Wellen im Wesentlichen Sinus-Konfiguration aufweisen.

31. Brennstoffzellenstapel nach einem der Ansprüche 24 bis 30, in welchem jedes der Kontaktbereichfelder ein im Wesentlichen ebenes Feld ist mit einer Erstreckung in der Fließrichtung und in der transversalen Richtung.

32. Brennstoffzellenstapel nach einem der Ansprüche 24 bis 31, in welchem eine Schicht in einem Paar einer transversal gewellten Konfiguration eine der Separatorfolien ist.

33. Brennstoffzellenstapel nach einem der Ansprüche 24 bis 32, in welchem die Separatorfolie elektrisch leitfähig ist.

34. Brennstoffzellenstapel nach Anspruch 33, in welchem die Einrichtung innerhalb des Stapels zum Schaffen eines elektrischen Kontaktes zwischen aufeinander folgenden der MEA-Folien eine Separatorfolie und die Kontaktbereiche aufweist.

35. Brennstoffzellenstapel nach einem der Ansprüche 24 bis 34, in welchem eine Röhre aufgeteilt ist durch eine diskrete fluidundurchlässige Separatorplatte (124), um eine Kühlmittelleitung zu bilden, die von dem ersten Abschnitt der Röhre und von der Separatorplatte begrenzt wird und eine Reaktionsmittelleitung, die von dem zweiten Abschnitt der Röhre und der Separatorplatte begrenzt wird.

36. Brennstoffzellenstapel nach einem der Ansprüche 24 bis 34, in welchem die Röhren in jedem Röhrenfeld aufgeteilt sind durch eine fluidundurchlässige Separatorplatte (124), um in jeder Röhre eine diskrete Kühlmittelleitung, begrenzt durch einen ersten Abschnitt der Röhre und die Separatorplatte, und eine diskrete Reaktionsmittelleitung, begrenzt durch den zweiten Abschnitt der Röhre und die Separatorplatte, zu bilden.

37. Brennstoffzellenstapel nach einem der Ansprüche 35 und 36, in welchem die Separatorplatte (124) eben ist.

## Revendications

1. Batterie de piles à combustible de type PEM (membrane échangeuse de protons) comprenant une série de couches MEA (ensemble d'électrodes à membrane) (107) et de couches séparatrices (106, 108) alternant les unes les autres et empilées ensemble, en contact mécanique et électrique, et comprenant des conduits pour l'écoulement de gaz réactifs, issus de sources externes afin d'activer électrochimiquement des régions des couches MEA, et des conduits pour des réfrigérants, chaque couche MEA comprenant une membrane électrolytique (92) interposée entre une couche d'anode (103) et une couche de cathode (101), **caractérisée en ce qu'**au moins les parties de frontière, de chaque couche séparatrice et des couches MEA leur étant associées, sont formées par une série d'éléments tubulaires (101, 102) globalement parallèles, étroitement groupés les uns à côté des autres, chaque dit élément tubulaire s'étendant longitudinalement dans la direction de l'écoulement.

2. Batterie de piles à combustible PEM selon la revendication 1, dans laquelle le flux de réfrigérant est fourni, soit à travers des éléments tubulaires sélectionnés desdits éléments tubulaires (101, 102), soit à travers des conduits traversants, formés dans ou par les espaces interstitiels (120) existant entre des éléments tubulaires adjacents.

3. Batterie de piles à combustible PEM selon la revendication 1 ou 2, dans laquelle les éléments tubulaires (101, 102) ont des sections transversales de dimensions et de formes identiques.

4. Batterie de piles à combustible PEM selon la revendication 3, dans laquelle les éléments tubulaires (101, 102) sont de section transversale circulaire.

5. Batterie de piles à combustible PEM selon la revendication 3, dans laquelle les éléments tubulaires (126, 128) sont de section transversale semi-circulaire;

6. Batterie de piles à combustible PEM selon la revendication 3, dans laquelle les éléments tubulaires (127) sont de section transversale trapézoïdale.

7. Batterie de piles à combustible PEM selon l'une quelconque des revendications 3 à 6, comprenant en plus des conduits d'humidification (123, 125) placés dans des espaces interstitiels sélectionnés, existant entre des éléments adjacents parmi lesdits éléments tubulaires.

8. Batterie de piles à combustible PEM selon la revendication 3, dans laquelle les éléments tubulaires (101, 102) sont de section transversale triangulaire.

9. Batterie de piles à combustible PEM selon l'une quelconque des revendications 3 à 5, dans laquelle des zones transversales successives sont décalées transversalement les unes des autres, d'environ la moitié de la largeur transversale d'un desdits éléments tubulaires (101, 102), de manière à faciliter la minimisation des dimensions de la batterie de piles à combustible.

10. Batterie de piles à combustible PEM selon l'une quelconque des revendications précédentes, dans laquelle les éléments tubulaires (101, 102) sont découpés à la longueur, à partir de produits tubulaires ayant une dimension axiale suffisante pour fabriquer une pluralité de tels éléments tubulaires.

11. Batterie de piles à combustible PEM selon l'une quelconque des revendications, dans laquelle la membrane électrolytique (116) de chaque zone transversale de piles à combustible est formée sur place.

12. Batterie de piles à combustible PEM selon l'une quelconque des revendications précédentes, dans laquelle la membrane électrolytique (116) de chaque zone transversale de piles à combustible est formée par découpage, à la largeur et à la longueur, d'une couche de matériau de membrane, puis placement et flexion de la membrane pour suivre la courbure des éléments tubulaires entre lesquels la membrane est placée.

13. Pour utilisation dans un empilement de piles à combustible comprenant une série de sous-ensembles de piles à combustible se répétant, empilées en batterie, un sous-ensemble d'empilement en batterie de piles à combustible comprenant :
une structure MEA (117) s'étendant globalement perpendiculairement à la dimension de l'empilement; et
une première strate séparatrice (106) imperméable aux gaz, réactive, s'étendant globalement dans une direction perpendiculaire à la direction d'empilement, placée de façon adjacente à la structure MEA mise en couche, sur l'une de ses faces, et mise en contact physique et électrique non continu avec elle, de manière à former une pluralité de conduits entre la structure MEA en couche et la première strate séparatrice, pour permettre l'écoulement à travers eux d'un premier gaz réactif,
une deuxième strate séparatrice (108) imperméable aux gaz, réactive, s'étendant globalement perpendiculaire à la direction de l'empilement, placée de façon adjacente à la structure MEA mise en couche, sur son autre face, et mise en contact physique et électrique non continu avec elle, de manière à former au moins un conduit discret entre la structure MEA en couche et la deuxième strate séparatrice, pour permettre l'écoulement à travers lui d'un deuxième gaz réactif,
la structure MEA mise en couche comprenant une couche de membrane d'échange d'ions (116), imperméable aux gaz, réactive, interposée entre les deux couches collectrices de courant (101, 103) conductrices de l'électricité, perméables aux gaz, réactives, et une couche discrète de particules électrocatalytiques, entre la membrane et chaque collecteur de courant,
chacune des couches collectrices de courant (101, 103) comprenant une pluralité discrète de demi-cylindres congruents, parallèles, les demi-cylindres étant agencés en contact côte à côte en une zone, de manière que les points de contact entre des demi-cylindres successifs soient situés aux extrémités des arcs des surfaces demi-cylindriques et soient situés dans un plan perpendiculaire à la direction d'empilement, et la surface concave de chaque demi-cylindre étant tournée vers la même face de ce plan et à distance de la membrane, de manière que les faces convexes des demi-cylindres des deux couches collectrices de courant soient placées face à la couche de membrane,
la première strate séparatrice fournissant au moins un chemin conducteur de l'électricité, partant du collecteur de courant, en contact avec la première strate séparatrice, passant par la première strate séparatrice, vers sa face opposée à la face en contact avec le collecteur de courant, et
la deuxième strate séparatrice fournissant au moins un chemin conducteur de l'électricité, partant du collecteur de courant, en contact avec une deuxième couche séparatrice, en passant par la deuxième couche séparatrice, vers sa face opposée à la face en contact avec le collecteur de courant.

14. Un sous-ensemble d'empilement en batterie de piles à combustible selon la revendication 1, dans laquelle chaque strate séparatrice est constituée d'une pluralité de demi-cylindres parallèles, chacun étant congruent aux demi-cylindres collecteurs de courant et tangent au collecteur de courant, de manière que chaque demi-cylindre de la strate séparatrice, conjointement avec un demi-cylindre discret du collecteur de courant, forme un conduit cylindrique pour réactif et une couche de conduit cylindrique pour réactif étant formée.

15. Un sous-ensemble d'empilement en batterie de piles à combustible selon la revendication 14, dans laquelle chaque couche de conduit est décalée transversalement, d'une distance sensiblement égale au rayon des conduits, et groupée contre chaque autre couche dans la dimension d'empilement, de manière à minimiser l'épaisseur du sous-ensemble d'empilement en batterie de piles à combustible dans la direction d'empilement.

16. Un sous-ensemble d'empilement en batterie de piles à combustible selon l'une des revendications 14 et 15, comprenant en plus une plaque séparatrice (124) imperméable aux gaz, plane, disposée entre les demi-cylindres d'une des strates séparatrices et les demi-cylindres collecteurs de courant adjacents, de manière que chaque demi-cylindre de ces strates séparatrices, conjointement avec la plaque séparatrice, forme un conduit pour réfrigérant, semi-cylindrique, et chaque cylindre collecteur de courant, conjointement avec la plaque séparatrice, forme un conduit semi-cylindrique pour réactif.

17. Un sous-ensemble d'empilement en batterie de piles à combustible selon l'une quelconque des revendications 12 et 15, comprenant en plus une plaque séparatrice (124) imperméable aux fluides, non plane, disposée entre les demi-cylindres d'une des strates séparatrices et les demi-cylindres collecteurs de courant adjacents, de manière que chaque demi-cylindre de ces strates séparatrices, conjointement avec la plaque séparatrice, forme un conduit pour réfrigérant, et que chaque demi-cylindre collecteur de courant, conjointement avec la plaque séparatrice, forme un conduit pour réactif, le conduit pour réactif étant de volume différent du conduit pour réfrigérant ainsi formé.

18. Un empilement de piles à combustible constitué d'au moins deux des sous-ensembles selon la revendication 15, empilés dans la direction d'empilement, chaque sous-ensemble étant transversalement décalé d'une distance sensiblement égale au rayon des conduits et empilé contre chaque sous-ensemble adjacent dans la direction d'empilement, pour minimiser l'épaisseur de l'empilement de piles à combustible, mesurée dans la direction d'empilement.

19. Un empilement de piles à combustible selon la revendication 18, comprenant, en plus, au moins un conduit pour réfrigérant disposé dans des canaux formés entre deux sous-ensembles consécutifs.

20. Un sous-ensemble d'empilement de piles à combustible, topologiquement équivalent aux sous-ensembles d'empilement de piles à combustible définis à la revendication 14.

21. Le sous-ensemble d'empilement de piles à combustible selon la revendication 20, dans laquelle les conduits à réactif ont une section transversale triangulaire.

22. Le sous-ensemble d'empilement en batterie de piles à combustible selon la revendication 20, dans laquelle les conduits à réactif ont une section transversale trapézoïdale.

23. Un sous-ensemble d'empilement en batterie de piles à combustible selon l'une quelconque des revendications 21 ou 22, dans laquelle les conduits de chaque couche de conduits sont décalés transversalement et tournés par rapport aux conduits des couches adjacentes de conduits et groupés les uns contre les autres dans la direction d'empilement, pour minimiser l'épaisseur du sous-ensemble à empilement de piles à combustible, dans la direction d'empilement.

24. Batterie de piles à combustible comprenant;
(i) un empilement de paires, empilées de façon contiguë, de couches contiguës, chaque dite paire comprenant une strate séparatrice (119) et une couche d'ensemble d'électrode à membrane (MEA) contiguë (117), de manière que, dans la pile, des strates séparatrices sensiblement identiques alternent avec des strates MEA sensiblement identiques, contiguës;
(ii) des moyens, à l'intérieur de l'empilement, pour établir un contact électrique entre des strates successives parmi lesdites strates MEA; et
(iii) des moyens pour conserver l'alignement des couches;
lesdites couches étant configurées pour former entre elles une pluralité de conduits empilés, s'étendant globalement parallèlement les uns aux autres dans la direction de l'écoulement;
chaque dite couche ayant une extension en direction transversale et ayant une extension dans la direction d'écoulement et étant sensiblement invariante dans la direction d'écoulement;
au moins l'une des couches, dans chaque paire intérieure desdites paires, étant une couche ondulée, ladite couche ondulée ayant une extension limitée dans la dimension d'empilement et s'étendant transversalement, depuis une frontière transversale de celle-ci vers l'autre frontière transversale de celle-ci, dans une succession transversale d'ondulations, les pics de ces ondulations étant chacun en contact avec une partie alignée associée de l'autre couche dans la paire, sur une zone de contact ayant une extension sensiblement continue dans la direction d'écoulement et une extension limitée dans la direction transversale, et les creux des ondulations étant chacune en contact avec une partie alignée associée de la couche alternée dans la paire adjacente suivante, sur une zone de contact ayant une extension sensiblement continue dans la direction d'écoulement et une extension limitée dans la direction transversale, de manière à former une paire de matrices de zones de contact, lesdites matrices de zones de contact étant espacées les unes des autres dans la direction d'empilement, chaque matrice de zones de contact étant constituée de zones de contact espacées transversalement, qui s'étendent de façon globalement parallèle les unes aux autres dans la direction de l'écoulement, lesdites couches et lesdites zones de contact formant ladite pluralité de conduits empilés, chaque dit conduit étant relié, par les parties de celles desdites couches qui sont adjacentes, qui sont situées entre des zones de contact successives dans la même matrice de contact,
dans laquelle les couches forment une zone empilée de tubes placés globalement parallèlement les uns aux autres, dans la direction d'écoulement, chaque tube étant constitué d'une première partie, formée par au moins une partie d'une strate associée parmi lesdites strates séparatrices, et d'une deuxième partie, formée par au moins une partie d'une strate associée desdites strates MEA.

25. Batterie de piles à combustible selon la revendication 24, dans laquelle les moyens, installés à l'intérieur de la pile pour fournir un contact électrique entre des strates successives parmi lesdites strates MEA, comprennent un matériau conducteur de l'électricité, placé dans lesdites zones de contact.

26. Batterie de piles à combustible selon la revendication 24 ou 25, dans laquelle les tubes sont agencés en une séquence empilée de matrices de tubes globalement planes, contiguës, chaque dite matrice de tubes ayant une extension dans la direction d'écoulement et dans la direction transversale, chaque volume intérieur d'une desdites matrices de tube étant déplacé transversalement d'une valeur de la moitié de la largeur d'un tube dans la direction transversale par rapport aux deux matrices de tubes lui étant contiguës, et dans laquelle une des couches de chaque paire est formée des premières parties de tube situées dans une matrice de tube associée et des deuxièmes parties de tube situées dans une matrice de tube contiguë à ladite matrice de tube associée, et l'autre des couches de chaque paire est formée de deuxièmes parties de tube situées dans une matrice de tube associée, et des premières parties de tube situées dans une matrice de tube contiguë à ladite matrice de tube associée.

27. Batterie de piles à combustible selon la revendication 26, dans laquelle les tubes sont de forme cylindrique à section circulaire, creuse, et la première partie de chacun desdits tubes est située sur un côté d'un diamètre du cylindre et la deuxième partie de chacun desdits tubes étant située de l'autre côté du diamètre du cylindre.

28. Batterie de piles à combustible selon la revendication 27, comprenant en plus au moins un conduit pour réfrigérant, disposé dans des canaux formés entre les premières parties des tubes de chaque strate séparatrice.

29. Batterie de piles à combustible selon la revendication 24 ou la revendication 25, dans laquelle les ondulations ont une configuration globalement en onde triangulaire.

30. Batterie de piles à combustible selon la revendication 24 ou la revendication 25, dans laquelle les ondulations sont de configuration globalement sinusoïdale.

31. Batterie de piles à combustible selon l'une quelconque des revendications 24 à 30, dans laquelle chaque matrice de zone de contact est une matrice globalement plane, ayant une extension dans la direction d'écoulement et dans la direction transversale.

32. Batterie de piles à combustible selon l'une quelconque des revendications 24 à 31, dans laquelle une couche, dans chaque paire de configurations ondulées transversalement, est l'une desdites strates séparatrices.

33. Batterie de piles à combustible selon l'une quelconque des revendications 24 à 32, dans laquelle les strates séparatrices sont conductrices de l'électricité.

34. Batterie de piles à combustible selon la revendication 33, dans laquelle les moyens installés à l'intérieur de l'empilement pour fournir un contact électrique entre des strates successives parmi lesdites strates MEA comprennent les strates séparatrices et les zones de contact.

35. Batterie de piles à combustible selon l'une quelconque des revendications 24 à 34, dans laquelle chaque tube est divisé par une plaque séparatrice (124) perméable aux fluides, discrète, pour former un conduit pour réfrigérant, délimité par la première partie du tube et la plaque séparatrice, et un conduit pour réactif, délimité par la deuxième partie du tube et la plaque séparatrice.

36. Batterie de piles à combustible selon l'une quelconque des revendications 24 à 34, dans laquelle les tubes situés dans chaque matrice de tube sont divisés par une plaque séparatrice (124) imperméable aux fluide, pour former dans chaque tube un conduit pour réfrigérant discret, délimité par la première partie du tube et la plaque séparatrice, et un conduit pour réactif discret, délimité par la deuxième partie du tube et la plaque séparatrice.

37. Batterie de piles à combustible selon l'une quelconque des revendications 35 et 36, dans laquelle la plaque séparatrice (124) est plane.
